**Europäisches Patentamt**

**European Patent Office**

**Office européen des brevets**

(19)

(11) Numéro de publication: **0 022 072**
**B1**

(12) **FASCICULE DE BREVET EUROPEEN**

(45) Date de publication du fascicule du brevet: **27.07.83**

(51) Int. Cl.³: **B 01 D 13/02, C 02 F 11/12**

(21) Numéro de dépôt: **80810190.1**

(22) Date de dépôt: **03.06.80**

(54) Procédé et dispositif pour concentrer une boue aqueuse par électroosmose.

(30) Priorité: **05.06.79 CH 5191/79**

(43) Date de publication de la demande:
**07.01.81 Bulletin 81/1**

(45) Mention de la délivrance du brevet:
**27.07.83 Bulletin 83/30**

(84) Etats contractants désignés:
**BE CH DE FR GB IT LI**

(56) Documents cités:
**CH - A - 600 932**
**DE - A - 1 927 740**
**DE - C - 179 086**
**DE - C - 266 971**
**DE - C - 476 144**
**GB - A - 383 199**
**GB - A - 1 414 564**
**NL - C - 68 314**

(73) Titulaire: **BATTELLE MEMORIAL INSTITUTE**
**7 route de Drize**
**CH-1227 Carouge/Genève (CH)**

(72) Inventeur: **Porta, Augusto**
**31 bis avenue de Miremont**
**CH-1206 Genève (CH)**
Inventeur: **Kulhanek, Antonin**
**47 avenue du Lignon**
**CH-1219 Le Lignon (CH)**

(74) Mandataire: **Dousse, Blasco et al,**
**7, route de Drize**
**CH-1227 Carouge/Genève (CH)**

Courier Press, Leamington Spa, England.

Procédé et dispositif pour concentrer une boue aqueuse par électroosmose

## Domaine technique

La présente invention a pour objet un procédé et un dispositif pour concentrer par électroosmose une boue aqueuse fluide formée de particules fines en suspension dans l'eau. On rencontre de telles boues, par exemple dans les résidus des stations d'épuration, dans l'exploitation des gravières argileuses, dans les sous-produits résultant du traitement de certains minerais (bauxite), dans l'industrie papetière, etc...

Lorsqu'on désire manipuler commodément ces boues, par exemple lorsqu'il s'agit de les ramasser mécaniquement pour en charger un véhicule il faut, au préalable les déshydrater par essorage afin de leur donner la consistance solide voulue et diminuer leur poids mort. Pour ce faire, un simple essorage sous pression ne convient pas car, en raison de la finesse des particules, les pores des filtres se bouchent rapidement, la filtration se ralentit exagérément et les dépenses d'énergie (pression) requises pour l'extraction du liquide deviennent incompatibles avec les résultats escomptés.

## Technique antérieure

On a remédié à ces inconvénients par des procédés de filtration basés sur l'électro-filtration. En effet on sait que la plupart des particules de boues minérales en suspension dans l'eau se chargent négativement au contact de celle-ci et, en conséquence, placées dans un champ électrique, elles migrent en direction de l'anode où elles s'accumulent créant, ainsi, au voisinage de la cathode, une région apauvrie en matières solides (électrophorèse). En intercalant entre ces électrodes un obstacle microporeux (membrane à propriétés osmotiques), les particules de boues seront retenues dans le compartment anodique alors que le liquide, traversant la membrane, sera entraîné dans le compartiment cathodique. Le principe de type de filtration par cathaphorèse est illustré par le brevet US No 4,003,811 qui décrit un procédé consistant à introduire une suspension de particules dans le compartiment anodique d'une cellule électrocinétique comportant une anode et une cathode, celles-ci étant séparées par une membrane perméable à l'eau et imperméable aux particules d'argile. Puis, on applique un courant continue entre les électrodes ce qui provoque le passage de l'eau à travers la membrane et le dépôt des particules sur l'électrode positive. Ce processus peut se dérouler en continu, le dépôt solide d'argile étant périodiquement détaché de l'anode sur laquelle il s'est déposé, tandis que l'excès de liquide du compartiment cathodique est évacué régulièrement. Il existe d'autres procédés d'électro-filtration basés sur le même principe, certains faisant intervenir, en plus, une pression à laquelle est soumise la boue à essorer. Parmi les documents concrétisant cet état de la technique, on peut citer les documents suivants: "The Electrical Dewatering of Clay Suspensions", par C. E. Curtis, Annual Meeting American Ceramic Society, Cleveland, Ohio, Febr. 1931; Electro-Osmotic and Electrophoretic Dewatering as Applied to Solid-Liquid Separation" par C. Rampalek, dans Solid Liquid Separation by J. P. Poole & D. Doyle, H.M.S.O. London (1966); "Application of Electroosmosis in the Consolidation of Clayey Soils" par L. Zaretti, L'Energia Elettrica 27, 625—31 (1950); "Electro-Chemical Treatment of Clays" par C. M. Pant, A. Kumar et K. P. Shukla, Soils & Fertilizers 16 (1953), Abstract. 402; les brevets américains 3,773,640—2,099,328—4,001,100—4,003,819; les brevets allemands No 163.549—316.444—15.4.114—124.509—128.085—131.932; le brevet français No 2.231.627 et le brevet anglais No 169,315. Ainsi, la demande de brevet français 2.231.627 (27.12.74) concerne un procédé de déshydratation d'une boue dans lequel on transporte de la boue déposée sur une bande perméable aux fluides, on fait passer à travers cette boue un courant continu entre des électrodes à électro-endosmose placées de part et d'autre de la couche de boue (c'est-à-dire l'anode au-dessus et la cathode au'dessous de la bande perméable) et, simultanément, on soumet la boue à une pression.

Le brevet allemand DE-C 316.444 (14.02.1918) décrit un dispositif pour l'électrofiltration de boues aqueses comportant une grille métallique cathodique sur laquelle on dépose la boue à filtrer et une plaque anodique abaissable à volonté sur la couche de boue de manière à la presser mécaniquement au cours de l'électro-filtration. La grille, qui peut se déplacer comme une bande sans fin, repose sur un support à trous à travers lequel le liquide filtré s'écoule.

Cependent, la mise en oeuvre de ces procédés est toujours délicate car il est difficile d'équilibrer les effets du champ électrique et ceux dûs à la pression. En effet, le champ électrique a tendance à retenir les particules à proximité de l'anode et à empêcher qu'elles ne bouchent le filtre cathodique. La pression, au contraire, bien qu'elle favorise le passage du liquide à travers les mailles du filtre, a tendance à plaquer les particules sur celui-ci et à en boucher les pores. C'est donc un équilibre énergétique qu'il faut établir entre la tension électrique et la pression dynamique, les paramètres de cet équilibre variant en fonction de la quantité d'eau que contient la boue à un instant donné et, en conséquence, en fonction du degré de filtration. En effet, plus la boue se déshydrate plus la filtration se ralentit et plus la pression nécessaire pour maintenir une vitesse de filtration suffisante devient élevée. Il convient de noter que le fait de maintenir une pression supérieure à la pression atmosphérique dans le cas d'une installation de filtration en continu est extrêmement difficile et revient très cher à cause, principalement, des problèmes d'étanchéité qui doivent être alors résolus.

Le brevet hollandais No 68 314 propose une solution à ce problème. En effet, ce document divulgue une installation pour essorer des matières humides telles que tourbe, pulpe de pomme de terre, limon de charbon et autres comprenant une enceinte de pressage comportant, en tant qu'organes de pressage, deux nappes mobiles constituées d'une pluralité de courroies sans fin juxtaposées, de section conique, séparées les unes des autres par une fraction de mm. Le solide entraîné par les courroies en déplacement est serré entre celles-ci et le liquide exprimé est expulsé par les fentes ménagées entre les courroies, le colmatage du système filtrant par les particules à filtrer étant notablement réduit en raison de la forme évasée des fentes ménagées entre les courroies. Le document cité indique aussi que le processus d'essorage peut être accéléré par l'application additionnelle de l'électrofiltration.

Exposé de l'invention

Le procédé de l'invention permet, par contre, d'élever peu à peu la pression à laquelle est soumise la boue au cours de la filtration et, ceci, d'une manière particulièrement naturelle et progressive sans faire appel à un dispositif dans lequel intervient une pression autre que la pression hydrostatique exercée par la boue dans l'enceinte de filtration.

Pour ce faire, on tire parti des effets combinés d'électroosmose et de ceux résultant de la pression hydrostatique qui règne dans le liquide en filtration. Suivant ce procédé, on fait couler et circuler la boue à déshydrater entre les électrodes d'une enceinte d'électrofiltration de telle façon que l'action de la pression hydrostatique croissante à laquelle chaque élément de boue en mouvement est soumis s'ajoute progressivement à l'effet d'électrofiltration produit par le champ électrique entre ces électrodes.

L'invention a donc pour objet un procédé pour concentrer en continu une boue formée de fines particules dispersées dans l'eau suivant lequel:

— on introduit la boue par l'extrémité supérieure d'une enceinte d'électrofiltration tubulaire non horizontale dont au moins une des parois perméable à l'eau mais imperméable aux particules à essorer est constituée d'une cathode filtrante fixe, ladite enceinte contenant encore une anode placée en face de la cathode,
— on crée entre les électrodes un champ électrique pour provoque par électroosmose le passage de l'eau à travers la cathode filtrante, l'effet d'électrofiltration ainsi obtenu s'ajoutant à l'effet de filtration résultant de la pression hydrostatique croissante à laquelle est soumise la boue au cours de son déplacement;

— le procédé étant caractérisé en ce que:

— l'anode fait face à la cathode sur toute la longueur de cette cathode, lesdites électrodes étant parallèles ou convergeant l'une vers l'autre dans la direction d'écoulement de la boue,
— on facilite le déplacement en continu de la boue épaissie en fin de parcours en l'entrainant tangentiellement aux parois de l'enceinte par des bandes d'entrainement dont le déplacement n'impose à la boue aucune pression notable modifiant la pression hydrostatique exercée par la hauteur de boue dans l'enceinte.

La cathode peut consister en une plaque d'un métal poreux ou plus simplement en une plaque métallique perforée recouverte d'un tissu à mailles très fines, ce tissu pouvant être lui-même conducteur (tissu métallique) ou isolant (tissu plastique). La tension appliquée aux électrodes est de 10 à 70 V/cm. L'entrainement de la boue peut s'effectuer, par exemple, par l'entremise de courroies coulissant entre la boue et les électrodes.

L'augmentation de la pression hydrostatique par cm parcouru à laquelle la boue est soumise est, bien entendu, fonction de l'inclinaison de l'enceinte. Elle est maximum lorsque l'enceinte est en position verticale.

Il est à noter que, dans le brevet allemand DE-C 476 144, on décrit un dispositif pour déshydrater des boues par électro-osmose. La figure 1 du dessin de ce brevet représente un tube de section rectangulaire dont deux des parois opposées sont munies d'électrodes, la cathode étant perforées et permettant le passage d'un liquide. La partie inférieure du tube est aveuglée par un tiroir mobile. On introduit la boue sous pression par le haut du tube où elle se déshydrate, l'eau s'écoulant à travers la cathode et, de là, hors du tube par un canal de sortie. Une fois la boue suffisamment déshydratée, on démasque la sortie inférieure du tube en retirant le tiroir de manière que ladite boue soit expulsée au dehors. Ce dispositif fonctionne de manière intermittente et la filtration s'effectue sous pression. Ce qui constitue deux défauts qui n'existent pas dans la présente invention.

Par ailleurs, il faut encore signaler une publication dans ce domaine, en l'occurence la demande de brevet allemand DE—A 1.927.740 qui concerne un dispositif et un procédé de filtration de boues. La revendication de procédé (revendication 7), la plus générale à la teneur suivante:

"Procédé électrique de filtration pour purifier un milieu comportant plusieurs phases suivant lequel on verse le milieu à filtrer dans un récipient contenant un élément filtrant et on en retire en continu la phase liquide par une sortie située à la partie inférieure du filtre, caractérisé par le fait qu'on accélère le déplacement et la séparation des particules solides et liquides constituant le milieu poly-phases en appliquant une différence de potentiel entre un électrode agencée dans l'élément filtrant et une autre électrode en contact avec le milieu à filtrer de manière à créer un champ électrique dans le récipient''.

En outre, une des figures du dessin de cette référence (fig. 4) représente un récipient tronconique inversé dont le fond est constitué d'un cône central perforé (cathode) par où s'écoule en continu l'eau de filtration, la matière solide déshydratée étant éliminée également en continu par des ouvertures annulaires de la base inférieure du tronc du cône (petite base). Ce dispositif présente quelque analogie avec une des formes d'exécution de l'invention et, à première vue, son fonctionnement ressemble à celui du procédé revendiqué. Il en diffère cependant par deux points d'importance pratique indéniable: il n'y a aucun moyen envisagé pour faire circuler la boue et, par ailleurs, les électrodes ne sont pas en face l'une de l'autre sur toute leur longueur ce qui empêche la création d'un champ électrique homogène propice à une électro-filtration efficace. En conséquence, ce dispositif connu ne présente pas les avantages des dispositifs mettant en oeuvre la présente invention comme on le verra ci-dessous. En effet, le présent procédé peut être mis en oeuvre au moyen d'un dispositif comprenant une enceinte tubulaire non horizontale dont au moins une des parois est constituée d'une cathode filtrante fixe perméable à l'eau mais imperméable aux particules à essorer, ladite enceinte contenant encore une anode placée face à la cathode, caractérisé en ce que l'anode fait face à la cathode sur toute la longueur de cette cathode, lesdites électrodes étant parallèles ou convergeant l'une vers l'autre dans la direction d'écoulement de la boue et en ce que le dispositif comprend, pour faciliter le déplacement de la boue épaissie en fin de parcours, deux courroies perforées se déplaçant en regard l'une de l'autre et au contact respectivement avec la cathode et l'anode, le déplacement des courroies n'imposant à la boue aucune pression notable modifiant la pression hydrostatique exercée par la boue dans l'enceinte. Les paramètres à mettre en oeuvre dépendent essentiellement des caractères chimico-physiques de la boue à filtrer, de sa teneur en eau, de sa fluidité, de la dimension des particules, de leur affinité mutuelle, etc ... Ces paramètres pourront être facilement déterminés par l'homme de métier en fonction des besoins. Ainsi, en général, on peut obtenir grâce au présent procédé des taux d'extraction de l'ordre de 60 % de l'eau contenue dans la boue en 15 à 30 minutes.

Meilleures manières de réaliser l'invention

Le dessin annexé représente trois formes d'exécution du dispositif permettant de mettre le procédé en oeuvre.

La figure 1 représente schématiquement en coupe une enceinte de filtration vue en position de travail.

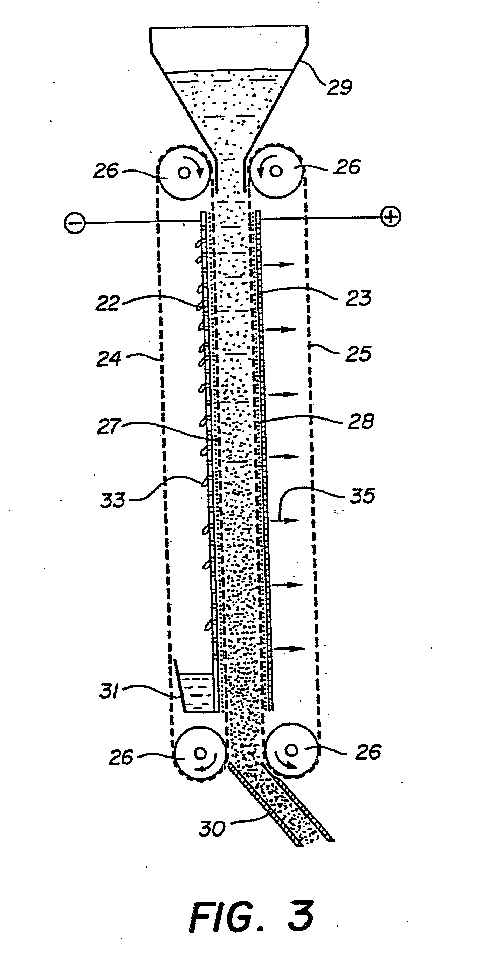

La figure 2 est une coupe de cette enceinte selon la ligne II—II.

La figure 3 représente une variante plus élaborée d'enceinte de filtration.

La figure 4 représente une variante plus performante de l'enceinte de la figure 3.

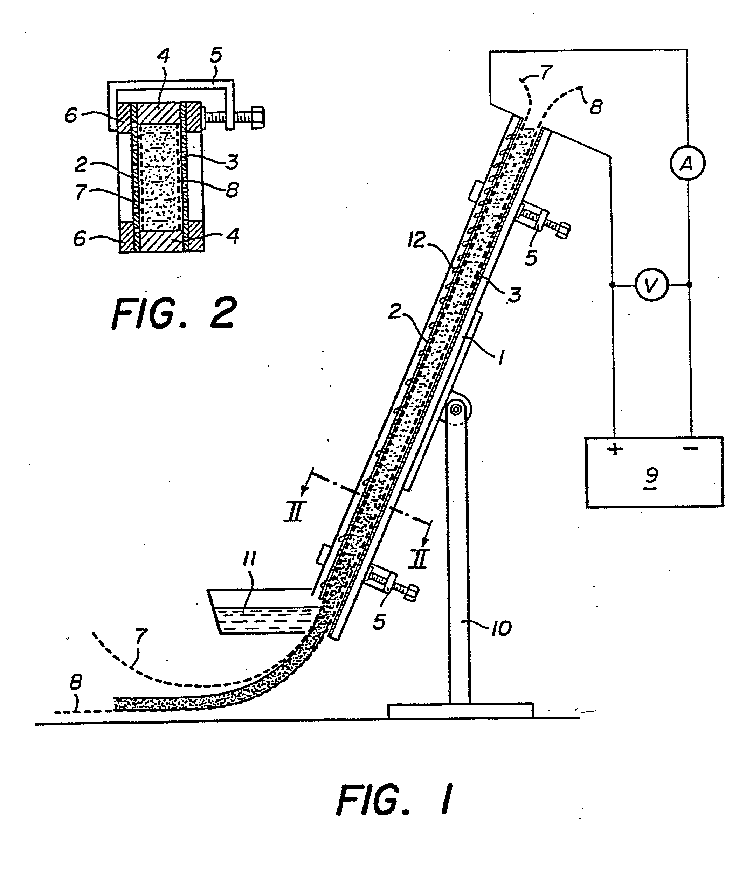

Le dispositif représenté à la figure 1 comprend une chambre tubulaire 1 constituée de deux plaques métalliques perforées 2 et 3 séparées par des éclisses 4 en matière isolante, le tout étant maintenu en place par des serre-joints 5 agissant sur des longerons 6.

Le dispositif comprend deux bandes de tissu filtrant plastique ou métallique 7 et 8, mobiles, et pouvant coulisser longitudinalement au contact des plaques 2 et 3, celles-ci étant reliées aux bornes, respectivement négatives et positives, d'un générateur continu 9.

Le dispositif comprend encore un support 10 et un bac de récupération d'eau 11.

Lors du fonctionnement du présent dispositif, on introduit la boue à filtrer sous forme d'une suspension fluide dans l'ouverture supérieure de la chambre 1, entre les portions libres des bandes 7 et 8, puis on applique une tension continue entre les électrodes 2 et 3, de manière que l'électro-filtration s'effectue, l'eau s'écoulant sous forme de gouttes 12 qui s'accumulent dans le bac 11. Au fur et à mesure que la boue descend dans la chambre 1, elle est soumise à une pression hydrostatique croissante dont la grandeur dépend de sa position par rapport au niveau supérieur d'entrée. Cet accroissement de pression compense le ralentissement normal de la filtration dû à la diminution du taux en eau de la boue et, ceci, sans que cette pression n'atteigne des valeurs trop grandes pouvant conduire au colmatage du filtre. Par ailleurs, au fur et à mesure de sa descente, la boue, perdant son eau, s'épaissit et, pour faciliter son déplacement en fin de parcours, on l'entraîne en déplaçant par traction les bandes filtrantes 7 et 8 dans le sens de la flèche. On obtient ainsi, à la sortie du filtre, un gâteau de boue filtrée compact ayant perdu une quantité notable de son eau de départ et pouvant être manipulé aisément avec des outils (pelles).

La variante représentée schématiquement à la figure 3, comprend les principaux organes fonctionnels suivants:

Une cathode 22, une anode 23, également constituées par des tôles de métal perforé, par exemple en acier inoxydable. Deux treillis fixes, respectivement 27 et 28, aux mailles très fines (de 10 à 100 $\mu$m environ) appliquées et fixées sur les électrodes 22 et 23. Deux bandes sans fin 24 et 25, en treillis grossier de matière isolante, se déplaçant en continu grâce à des rouleaux 26 entraînables par un moteur non représenté. Une trémie de chargement 29, un conduit de sortie 30 et un bac à eau 31.

Lors du fonctionnement de ladite variante, on charge la boue par la trémie 29 et celle-ci est entraîne par les rubans ajourés 24 et 25 du haut en bas de l'appareil. Tout en circulant, cette boue est soumise au champ créé par les électrodes perforées 22 et 23 et à la pression hydrostatique produite par son propre poids. Dès lors la filtration s'effectue régulièrement et les gouttes (33) s'accumulent au bas de l'appareil tandis que les gaz éventuellement produits par l'action du courant électrique sur la boue se dégagent à travers l'anode perforée (35). La boue déshydratée en fin de course est évacuée par le conduit 30 sous forme d'un boudin de consistance semi-solide qui peut être aisément chargé dans un camion et transporté comme de la terre ordinaire.

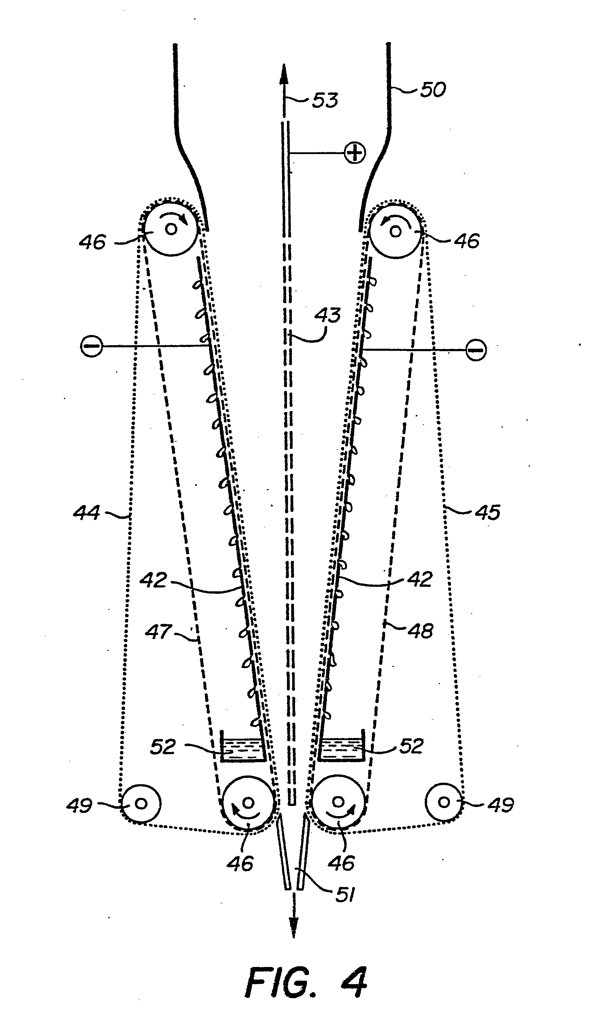

La variante représentée à la figure 4 comprend deux cathodes perforées 42 placées symétriquement de part et d'autre d'une anode centrale creuse 43, également perforée et convergeant vers celle-ci dans le sens de déplacement de la boue; ces électrodes sont fabriquées en un métal inerte dans les conditions de travail, en acier inoxydable par exemple. Le dispositif comprend encore des rubans 44 et 45 en tissu ou treillis filtrant à mailles très fines accolés, dans la zone de filtration, à des bandes sans fin 47 et 48 aux mailles grossières entraînées en continu par des rouleaux 46 grâce à l'action d'un moteur non représenté au dessin. Comme on le voit au dessin, le trajet des rubans 44 et 45 n'est pas le même que celui des bandes 47 et 48 en dehors de la zone de filtration, les premiers étant déviés vers l'extérieur par des tendeurs munis de poulies, celles-ci figurant au dessin au chiffre 49. Le dispositif comprend encore une trémie de chargement 50 un conduit de sortie 51 et des bacs 52 de récolte de l'eau de filtration.

Lors de son fonctionnement, cette variante se comporte comme la variante représentée à la figure 3 à l'exception du fait que son action de filtration est symétrique par rapport à son axe longitudinal lequel est occupé par l'anode. L'anode étant creuse, les gaz éventuellement produits par réaction anodique se dégagent à l'intérieur de celle-ci et sont expulsés vers le haut comme l'indique la flèche 53. Par ailleurs les rubans filtrants 44 et 45 étant intercalés entre la boue à filtrer et les bandes d'entraînement 47 et 48 et se déplaçant de concert avec elles, celles-ci sont protégées des contaminations par la boue ce qui facilite l'entretien du mécanisme d'entraînement et diminue son usure. Pendant la marche du dispositif, la boue attenant au tissu ou treillis filtrant des rubans 44 et 45 peut être aisément éliminée par râclage ou lavage au nivea des tambours 49. Les dispositifs de râclage ou de lavage (par exemple au moyen d'un jet d'eau) sont classiques et, pour ne pas compliquer la lecture du dessin, n'ont pas été représentés.

Application pratique
L'exemple qui suit illustre l'invention.

Exemple
On utilise un dispositif conforme à celui décrit à la figure 3 dont les cotes sont approximativement les suivantes: plaques perforées 22 et 23:25×200 cm. Séparation entre les électrodes : 4 cm. Les plaques perforées sont en tôle d'acier inoxydable de 1 mm comportant des trous de 0,5 cm placés à environ 2—3 cm les uns des autres. Les grilles 27 et 28 sont en acier inoxydable ou en nickel et leurs mailles sont de 80 $\mu$m.

Par la trémie supérieure on introduit de la boue argileuse provenant d'une gravière, cette boue contenant 600 g environ de matières minérales par litre. Puis on fait défiler les rubans d'entraînement 24 et 25 en polyéthylène ajouré à une vitesse d'environ 50 cm/min et, simultanément, on établit une tension de 15 V/cm entre les électrodes. L'eau sourd à travers les perforations de la cathode 22 et s'accumule dans le bac 31 tandis que la boue concentrée est extraite par le tube 30 après avoir perdu environ 60 % de son eau initiale.

La consommation électrique est de l'ordre de 15 KWh par m³ d'eau extraite à une densité de courant d'environ 0,3 A/dm².

**Revendications**

1. Procédé pour concentrer en continu une boue formée de fines particules dispersées dans l'eau suivant lequel:

— on introduit la boue par l'extrémité supérieure d'une enceinte d'électrofiltration tubulaire non horizontale dont au moins une des parois perméable à l'eau mais imperméable aux particules à essorer est constituée d'une cathode filtrante fixe, ladite enceinte contenant encore und anode placée en face de la cathode,
— on crée entre les électrodes un champ électrique pour provoque par électroosmose le passage de l'eau à travers la cathode filtrante, l'effet d'électrofiltration ainsi obtenu s'ajoutant à l'effet de filtration résultant de la pression hydrostatique croissante à laquelle est soumise la boue au cours de son déplacement,

le procédé étant caractérisé en ce que:

— l'anode fait face à la cathode sur toute la longueur de cette cathode, lesdites électrodes étant parallèles ou convergeant l'une vers l'autre dans la direction d'écoulement de la boue,
— on facilite le déplacement en continu de la boue épaissie en fin de parcours en l'entrainant tangentiellement aux parois de l'enceinte par des bandes d'entraînement dont le déplacement n'impose à la boue aucune pression notable modifiant la pression hydrostatique exercée par la hauteur de boue dans l'enceinte.

2. Procédé selon la revendication 1, caractérisé en ce que l'on opère au moyen d'un champ électrique de 10 à 70 V/cm.

3. Dispositif pour la mise en oeuvre du procédé selon la revendication 1, comprenant une enceinte tubulaire non horizontale dont au moins une des parois est constituée d'une cathode filtrante fixe perméable à l'eau mais imperméable aux particules à essorer, ladite enceinte contenant encore une anode placée face à la cathode, caractérisé en ce que l'anode fait face à la cathode sur toute la longueur de cette cathode, lesdites électrodes étant parallèles ou convergeant l'une vers l'autre dans la direction d'écoulement de la boue et en ce que le dispositif comprend, pour faciliter le déplacement de la boue épaissie en fin de parcours, deux courroies perforées se déplaçant en regard l'une de l'autre et au contact respectivement avec la cathode et l'anode, le déplacement des courroies n'imposant à la boue aucune pression notable modifiant la pression hydrostatique exercée par la boue dans l'enciente.

4. Dispositif selon la revendication 3, caractérisé en ce que la cathode filtrante comporte une plaque métallique perforée recouverte d'un tissu à mailles permettant la filtration des particules de la boue.

5. Dispositif selon la revendication 4, caractérisé en ce que ledit tissu est formé de fils métalliques ou plastiques, la dimension de ses mailles étant comprise entre 10 et 100 micromètres.

6. Dispositif selon la revendication 3, caractérisé en ce que l'anode est poreuse de manière à laisser passer les gaz éventuellement produits au cours de la filtration tout en retenant les particules de la boue.

7. Dispositif pour la mise en oeuvre du procédé selon la revendication 1 comprenant une enceinte tubulaire non horizontale, caractérisé en ce qu'il comporte une anode sous la forme d'un tube perforé creux (43) perméable aux gaz mais retenant les particules de la boue et disposé à l'intérieur de l'enceinte selon la direction d'écoulement de la boue et, se faisant face de part et d'autre de l'anode et sur toute la longueur de l'anode, deux cathodes perforées (42) convergeant vers l'anode dans le sens d'écoulement de la boue, lesdites cathodes constituant deux parois de l'enceinte tubulaire, chacune de ces cathodes étant recouvertes par successivement une bande d'entraînement perforée (47, 48) et un ruban filtrant (44, 45) tous deux sans fin et se mouvant de concert, le tout étant agencé de manière que l'eau expulsée par le champ électrique appliqué entre l'anode (43) et les cathodes (42) s'écoule successivement à travers les rubans (44, 45), les bandes d'entrainement (47, 48) et les cathodes (42), le déplacement des bandes d'entrainement perforées et des rubans filtrants n'imposant à la boue aucune pression notable modifiant la pression hydrostatique exercée par la boue dans l'enceinte.

**Patentansprüche**

1. Verfahren zum kontinuierlichen Eindicken eines Schlammes aus feinen, im Wasser verteilten Teilchen, gemäß welchem

— der Schlamm durch das obere Ende eines nicht horizontalen rohrförmigen Elektrofiltrierbehälters eingeführt wird, von dem mindestens eine der für das Wasser durchlässigen, aber für die zu trocknenden Teielchen undurchlässigen Wände aus einer festen Filtrierkathode besteht, wobei der Behälter auch eine gegenüber der Kathode angeordnete Anode enthält, und
— zwischen den Elektroden ein elektrisches Feld errichtet wird, um durch Elektroosmose den Durchgang des Wassers durch die Filtrierkathode hervorzurufen, wobei die so erhaltene Elektrofiltrationswirkung sich zu der Filtrierwirkung addiert, die aus dem steigenden hydrostatischen Druck resultiert, dem der Schlamm im Verlauf seiner Verschiebung unterworfen ist,

dadurch gekennzeichnet, daß

— die Anode über die gesamte Länge der Kathode dieser Kathode gegenüber angeordnet ist, wobei die Elektroden parallel oder konvergent zueinander in Richtung der Verschiebung des Schlamms verlaufen, und daß
— die kontinuierliche Verschiebung des eingedickten Schlamms, am Ende des Förderweges erleichtert wird, indem man ihn tangential zu den Wänden des Behälters durch Mitnahmebänder bewegt, deren Verschiebung auf den Schlamm keinerlei merklichen Druck ausübt, der den hydrostatischen Druck verändert, der durch die Höhe des Schlamms in dem Behälter ausgeübt wird.

2. Verfahren nach Anspruch 1, dadurch gekennzeichnet, daß mittels eines elektrischen Feldes von 10 bis 70 V/cm gearbeitet wird.

3. Vorrichtung zur Durchführung des Verfahrens nach Anspruch 1 mit einem nicht horizontalen rohrförmigen Behälter, bei dem zumindest eine seiner Wände aus einer festen Filtrier-kathode besteht, die für das Wasser durchlässig, aber nicht durchlässig für die zu trocknenden Teilchen ist, wobei der Behälter auch ein Anode enthält, die gegenüber der Kathode angeordnet is, dadurch gekennzeichnet, daß die Anode über die gesamte Länge der Kathode dieser Kathode gegenüber angeordnet ist, wobei die Elektroden parallel oder konvergent zueinander in der Richtung des Abflusses des Schlamms verlaufen, und daß

die Vorrichtung zur Erleichterung der Verschiebung des eingedickten Schlamms am Ende des Förderweges zwei perforierte Förderbänder aufweist, die sich einander gegenüber verschieben und in entsprechender Berührung mit der Kathode und der Anode stehen, wobei die Verschiebung der Förderbänder auf den Schlamm keinerlei merklichen Druck ausübt, der den hydrostatischen Druck verändert, der durch den Schlamm in dem Behälter ausgeübt wird.

4. Vorrichtung nach Anspruch 3, dadurch gekennzeichnet, daß die Filtrierkathode eine perforierte Metallplatte aufweist, die mit einem Wirkstoff bedeckt ist, der die Filtrierung der Schlammteilchen ermöglicht.

5. Vorrichtung nach Anspruch 4, dadurch gekennzeichnet, daß der Stoff aus Metall- oder Kunststoff-fäden besteht, wobei die Abmessung seiner Maschen zwischen 10 und 100 $\mu m$ leigt.

6. Vorrichtung nach Anspruch 3, dadurch gekennzeichnet, daß die Anode porös ist, um die möglicherweise im Verlauf der Filtrierung erzeugten Gase durchzulassen, wobei die Schlammteilchen zurückgehalten werden.

7. Vorrichtung zur Durchführung des Verfahrens nach Anspruch 1 mit einem nicht horizontalen rohrförmigen Behälter, dadurch gekennzeichnet, daß er eine Anode in Form eines hohlen perforierten Rohrs (43) aufweist, die durchlässig ist für die Gase, aber die Teilchen des Schlamms zurückhält und die im Inneren des Behälters entsprechend der Richtung des Abflusses des Schlamms angeordnet ist, und sich gegenüberliegend auf beiden Seiten der Anode und über die gesamte Länge der Anode hinweg zwei perforierte Kathoden (42) aufweist, die zur Anode hin in Richtung des Abflusses des Schlamms zusammenlaufen, wobei die Kathoden zwei Wände des rohrförmigen Behälters darstellen und jede dieser Kathoden aufeinanderfolgend von einem perforierten Mitnahmeband (47, 48) und einem Filtrierband (44, 45) bedeckt ist, die beide endlos sind und sich gemeinsam bewegen, wobei das Ganze dergestalt betrieben wird, daß das durch das zwischen der Anode (43) und den Kathoden (42) angelegte elektrische Feld ausgestoßene Wasser aufeinanderfolgend über die Bänder (44, 45), Mitnahmebänder (47, 48) und die Kathoden (42) abfließt, während die Verschiebung der perforierten Mitnahmebänder und der Filtrierbänder dem Schlamm keinerlei merklichen Druck auferlegt, der den durch den Schlamm in dem Behälter ausgeübten hydrostatischen Druck verändert.

**Claims**

1. Method for continuously concentrating a sludge formed of fine particles dispersed in water, comprising:

— feeding the sludge into the top inlet of a non-horizontal, tubular electrofiltration enclosure having at least one wall permeable to water but impermeable to the particles to be dewatered constituted of a fixed filtering cathode, said enclosure further comprising an anode in facing relationship to the cathode,

— applying an electric field between the electrodes for inducing by electroosmosis the passage of water through said filtering cathode, whereby the electro-filtration effect reinforces the filtration resulting from the increasing hydrostatic pressure acting on the sludge when moving along said enclosure,

said method being characterized in that:

— said anode faces the cathode along the full length of said cathode, said electrodes being in parallel relation or in converging relation toward each other in the direction of displacement of the sludge, and

— the continuous displacement of the thickened sludge is facilitated in the region toward the enclosure outlet by tangentially moving driving belts whose motion imposes no substantial added pressure to the hydrostatic pressure exerted by the sludge height in the enclosure.

2. The method of claim 1, wherein said electric field between the anode and the cathode is 10—70 V/cm.

3. Apparatus for carrying out the method according to claim 1, comprising a non-horizontal tubular enclosure having at least one wall permeable to water but impermeable to the particles to be dewatered constituted of a fixed filtrating cathode, said enclosure further containing an anode in facing relationship to the cathode, characterized in that said electrodes are in parallel relation or in converging relation toward each other in the direction of displacement of the sludge over the full length of that cathode, and that the apparatus comprises, for facilitating the displacement of the thickened sludge toward the enclosure outlet, two tangentially moving in mutually facing relationship perforated belts in contact with the cathode and the anode, respectively, whose motion imposes no substantial additional pressure to the hydrostatic pressure due to the sludge height in the enclosure.

4. Apparatus according to claim 3, characterized in that said cathode comprises a perforated metal plate covered with a very fine mesh fabric allowing filtration fo the sludge particles.

5. Apparatus according to claim 4, wherein said fabric is formed from metal or plastic wires with meshes from 10 to 100 $\mu$.

6. Apparatus according to claim 3, characterized in that the anode is porous so as to conduct gases evolved during filtration out of said sludge through said anode while retaining the sludge particles.

7. Apparatus for carrying out the method according to claim 1, comprising a non-horizontal tubular enclosure, characterized in that it comprises an anode in the form of a hollow perforated tube (43) which is permeable to gases but retains the sludge particles and which is arranged inside of the enclosure along the direction of displacement of the sludge and, in facing relationship on opposite sides of and over the full length of the anode, two perforated cathodes (42) converging toward each other in the direction of displacement of the sludge, said cathodes constituting two walls of the enclosure, each of said cathodes being covered by, successively, a perforated driving belt (47, 48) and a filtering band (44, 45) both endless and moving in harmony, the whole being arranged so that the water expelled by the electric field between the anode (43) and the cathodes (42) will flow through, successively, the filter bands (44, 45), the driving belts (47, 48) and the cathodes (42), the displacement of the said perforated driving belts and filter bands imposing to the sludge no substantial added pressure for modifying the hydrostatic pressure exerted by the sludge in the enclosure.

FIG. 2

FIG. 1

**FIG. 3**

**FIG. 4**